# EUROPEAN PATENT APPLICATION

(11) **EP 4 715 722 A1**
(43) Date of publication of application: **25.03.2026**
(21) Application number: 24849143.3
(22) Date of filing: 29.07.2024
(51) Int. Cl.: G06Q 50/04

(54) **QUALITY FACTOR ESTIMATION METHOD, OPERATION CONDITION CHANGE METHOD, MODEL GENERATION METHOD, QUALITY FACTOR ESTIMATION DEVICE, AND OPERATION CONDITION CHANGE DEVICE**

(30) Priority: 31.07.2023 JP 2023124971
(71) Applicant: JFE Steel Corporation, Tokyo, 100-0011 (JP)
(72) Inventor: NAKAGAWA, Hiroshi, Tokyo 100-0011 (JP); TAKAGI, Hiroyuki, Tokyo 100-0011 (JP); KUYAMA, Shuji, Tokyo 100-0011 (JP); HIRATA, Takehide, Tokyo 100-0011 (JP)
(74) Representative: Hoffmann Eitle
(86) International application number: PCT/JP2024/027012
(87) International publication number: WO 2025/028492

(57) **Abstract**

A method of estimating quality factors includes a step of acquiring quality data indicating a quality of a product with respect to normal quality and m types of quality defects, m being two or more, a step of acquiring operating data of a manufacturing process, a step of creating quality evaluation data for each of the m types of quality defects, a step of acquiring m types of models generated using the quality evaluation data and determining a feature importance indicating the magnitude of contribution of an operating variable for each of the m types of models, and a step of identifying the operating variable that is estimated to be a major factor for at least one of the m types of quality defects by comparing the feature importance of the m types of models.

## Description

### TECHNICAL FIELD

The present disclosure relates to a method of estimating quality factors, a method of changing operating conditions, a method of generating a model, a quality factor estimation apparatus, and an operating condition changing apparatus.

### BACKGROUND

In manufacturing processes where operating conditions determine quality, methods for predicting quality from operating conditions are known. For example, there is a known method for predicting quality using a physical model constructed based on knowledge of the mechanism by which quality defects occur, and a known method for predicting quality by applying a multiple regression model or a decision tree model using operating data and quality data. In the method using a model, the operating data of the product is inputted into the model to calculate a predicted value of quality, and the predicted value is evaluated, thereby enabling the model to be evaluated.

For example, Patent Literature (PTL) 1 discloses a method of modeling an operating variable space, in which operating data is used as a basis vector, by dividing the operating variable space into several local regions based on the operating data and quality data. An activation function is calculated from operating data. The activation function expresses the contribution rate, which indicates the degree to which each local relational expression that represents the model affects the overall quality, as a function of coordinates in the operating variable space. A mathematical model that represents the relationship between overall operating variables and quality is then derived. If the error of the mathematical model does not satisfy set convergence criteria, the number of splits of the operating variable space is increased, and the operating variables to be used in the local relational expressions are selected using a stepwise method. The processes of increasing the number of splits of the operating variable space, constructing local relational expressions, selecting variables, and constructing an activation function are repeated until a convergence test is satisfied.

### CITATION LIST

### Patent Literature

PTL 1: JP 2012-027683 A

### SUMMARY

### (Technical Problem)

The method of PTL 1 determines the number of splits based on a convergence test calculated from a model error. The split points that determine the split pattern can be found, for example, by extracting data for one operating variable, dividing this data into a plurality of groups, determining the value of the operating variable that forms the boundary of each group, and then calculating this value for all operating variables. Specifically, a clustering method or a value manually set by a process operator is used. However, in the method of determining the number of splits and split points disclosed in PTL 1, there is a possibility that local regions that contradict the mechanism of occurrence of the quality defect to be predicted will be generated in the mathematical model that represents the derived relationship between the overall operating variables and quality. Operating variables selected within a local region may also contradict the physical mechanism of occurrence. Consequently, even if the mathematical model has high accuracy, a problem remains in that the quality defect factors estimated from the constructed mathematical model do not match the mechanism of quality defect occurrence.

In view of the above circumstances, an aim of the present disclosure is to provide a method of estimating quality factors, a method of changing operating conditions, a method of generating a model, a quality factor estimation apparatus, and an operating condition changing apparatus that can estimate quality defect factors with high accuracy.

### (Solution to Problem)

(1) A method of estimating quality factors according to an embodiment of the present disclosure is
   a method of estimating quality factors to be executed by a quality factor estimation apparatus used in a manufacturing process to manufacture a product, the method comprising:
   a quality data acquisition step of acquiring quality data indicating a quality of the product with respect to normal quality and m types of quality defects, m being two or more;
   an operating data acquisition step of acquiring operating data of the manufacturing process;
   a quality evaluation data creation step of creating m types of quality evaluation data formed by the quality data and the operating data corresponding to the quality defect for each of the m types of quality defects, and the quality data and the operating data corresponding to the normal quality;
   a feature importance determination step of acquiring m types of models for predicting each of the m types of quality defects, the m types of models being generated using the quality evaluation data with the quality of the product as a target variable and an operating variable included in the operating data as an explanatory variable, and determining a feature importance indicating a magnitude of contribution of the operating variable for each of the m types of models; and
   a defect factor estimation step of identifying the operating variable that is estimated to be a major factor for at least one of the m types of quality defects by comparing the feature importance of the m types of models.
(2) As an embodiment of the present disclosure, in (1),
   the defect factor estimation step includes inputting the quality evaluation data used in generating one model among the m types of models and the quality evaluation data used in generating another model into the one model, and in a case in which a difference in accuracy of a prediction result is greater than a predetermined value, identifying the operating variable that is estimated to be a major factor for a quality defect corresponding to the one model.
(3) As an embodiment of the present disclosure, in (1) or (2),
   the defect factor estimation step includes searching for a common operating variable for which the feature importance in corresponding models is ranked high for two or more types of quality defects out of the m types of quality defects, and identifying the operating variable by regarding the common operating variable as a common factor of corresponding quality defects.
(4) As an embodiment of the present disclosure, in any one of (1) to (3),
   the defect factor estimation step includes selecting, for at least one of the m types of quality defects, a candidate variable of an operating variable that is estimated to be a major factor, based on the feature importance, and further using actual operation data that indicates a relationship between the quality defect and the operating variable to probabilistically evaluate a relationship between the selected candidate variable and the quality defect and identify the operating variable that is estimated to be a major factor.
(5) A method of changing operating conditions according to an embodiment of the present disclosure includes
   an operating condition change instruction step of changing operating conditions by a command to change operating conditions for the operating variable identified by the method of estimating quality factors according to (3) or (4).
(6) A method of generating a model according to an embodiment of the present disclosure is
   a method of generating a model to be used in the method of estimating quality factors according to any one of (1) to (4), comprising:
   a step of generating a model corresponding to the one quality defect by machine learning using training data, with the quality evaluation data corresponding to the one quality defect being the training data, and the training data taking the quality of the product as a target variable and an operating variable included in the operating data as an explanatory variable,
   wherein the m types of models are generated by executing the step of generating the model for each of the m types of quality defects.
(7) A quality factor estimation apparatus according to an embodiment of the present disclosure is
   a quality factor estimation apparatus used in a manufacturing process to manufacture a product, the quality factor estimation apparatus comprising:
   a quality data acquisition interface configured to acquire quality data indicating a quality of the product with respect to normal quality and m types of quality defects, m being two or more;
   an operating data acquisition interface configured to acquire operating data of the manufacturing process;
   a quality evaluation data creation unit configured to create m types of quality evaluation data formed by the quality data and the operating data corresponding to the quality defect for each of the m types of quality defects, and the quality data and the operating data corresponding to the normal quality;
   a feature importance determination unit configured to acquire m types of models for predicting each of the m types of quality defects, the m types of models being generated using the quality evaluation data with the quality of the product as a target variable and an operating variable included in the operating data as an explanatory variable, and determining a feature importance indicating a magnitude of contribution of the operating variable for each of the m types of models; and
   a defect factor estimation unit configured to identify the operating variable that is estimated to be a major factor for at least one of the m types of quality defects by comparing the feature importance of the m types of models.
(8) As an embodiment of the present disclosure, in (7),
   the defect factor estimation unit inputs the quality evaluation data used in generating one model among the m types of models and the quality evaluation data used in generating another model into the one model, and in a case in which a difference in accuracy of a prediction result is greater than a predetermined value, identifies the operating variable that is estimated to be a major factor for a quality defect corresponding to the one model.
(9) As an embodiment of the present disclosure, in (7) or (8),
   the defect factor estimation unit searches for a common operating variable for which the feature importance in corresponding models is ranked high for two or more types of quality defects out of the m types of quality defects, and identifies the operating variable by regarding the common operating variable as a common factor of corresponding quality defects.
(10) As an embodiment of the present disclosure, in any one of (7) to (9),
   the defect factor estimation unit selects, for at least one of the m types of quality defects, a candidate variable of an operating variable that is estimated to be a major factor, based on the feature importance, and further uses actual operation data that indicates a relationship between the quality defect and the operating variable to probabilistically evaluate a relationship between the selected candidate variable and the quality defect and identify the operating variable that is estimated to be a major factor.
(11) An operating condition changing apparatus according to an embodiment of the present disclosure includes:
   an operating condition change instruction unit configured to change operating conditions by a command to change operating conditions for the operating variable identified by the quality factor estimation apparatus according to (9) or (10).

### (Advantageous Effect)

According to the present disclosure, a method of estimating quality factors, a method of changing operating conditions, a method of generating a model, a quality factor estimation apparatus, and an operating condition changing apparatus that can estimate quality defect factors with high accuracy can be provided.

### BRIEF DESCRIPTION OF THE DRAWINGS

In the accompanying drawings:
FIG. 1 is a block diagram illustrating a configuration example of a quality factor estimation apparatus according to an embodiment of the present disclosure;
FIG. 2 is a diagram illustrating an example of changes in the accuracy of prediction;
FIG. 3 is a diagram illustrating operating variables of a steelmaking model arranged in order of feature importance;
FIG. 4 is a diagram illustrating operating variables of a hot-rolling model arranged in order of feature importance; and
FIG. 5 is a diagram illustrating the relationship between the occurrence rate of steelmaking defects, the total length of the coils to be analyzed, and the factors of steelmaking defects and estimated operating variables.

### DETAILED DESCRIPTION

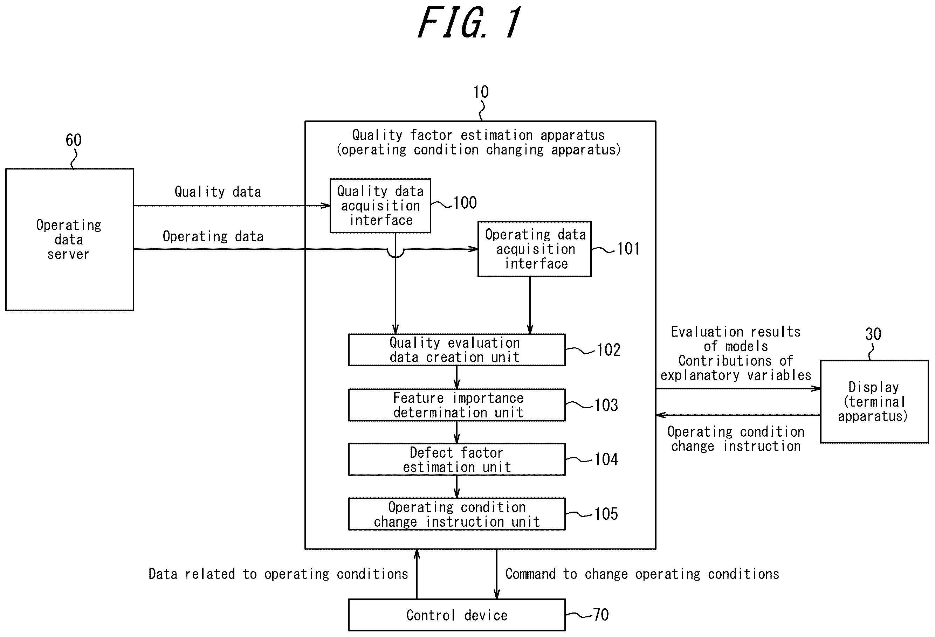

Hereinafter, a method of estimating quality factors, a method of changing operating conditions, a method of generating a model, a quality factor estimation apparatus 10 (see FIG. 1), and an operating condition changing apparatus according to embodiments of the present disclosure will be described with reference to the drawings. The method of estimating quality factors and the quality factor estimation apparatus 10 according to the present embodiment use a model (mathematical model) generated to predict product quality in a manufacturing process for manufacturing a product. The model is generated (constructed) by the method of generating a model according to the present embodiment. The method of estimating quality factors and quality factor estimation apparatus 10 according to the present embodiment can be used in all processes in which operations determine quality, and are useful in clarifying the causes of product defects by illustrating the correlation between a plurality of operating conditions and product quality.

FIG. 1 is a block diagram illustrating a configuration example of the quality factor estimation apparatus 10 according to an embodiment of the present disclosure. The quality factor estimation apparatus 10 is used in a manufacturing process to manufacture a product. The process flow illustrated by arrows, in which each block in FIG. 1 is treated as a process, represents a method of estimating the cause of a quality defect in a product in a manufacturing process in the present embodiment (method of estimating quality factors). The method of estimating quality factors is executed by the quality factor estimation apparatus 10.

For example, in a case in which the manufacturing process is a steel manufacturing process, the operating data may include the thermocouple temperature in a continuous casting process and the reheating furnace temperature in a hot-rolling process. The operating data may be given as continuous values, discrete values, or categorical values. For example, when the manufacturing process is a steel manufacturing process, the quality data is the type of quality defect and is given as a categorical value.

Here, the operating data and the quality data may be associated with one product, or the operating data and the quality data may be associated with each of a plurality of parts of one product. In the present embodiment, one product is divided into N regions. Each region is given a quality variable a as quality data and operating variables b = [b₁, b₂, ..., bₚ] as operating data. The quality variable a is a label that indicates whether the product corresponds to one of m types of quality defects or does not correspond to any quality defect (normal quality). Here, m is 2 or more. That is, m types refers to two or more types. Therefore, a data set corresponding to one product can be obtained by collecting quality data and operating data in each of N regions and can be expressed as a matrix of N rows by (1 + p) columns. Here, it is not necessary to divide one product into a plurality of regions as described above, and N may be 1, for example. That is, N is an integer of 1 or more. In addition, since there is a plurality of operating variables b, p is an integer of 2 or more.

In each of the N regions, a quality variable a is associated with operating variables b and can generally be expressed as a = f(b) using a mapping function f. In the present disclosure, a quality defect or normal quality (good quality) is predicted by a model (F) in which the operating variables b are explanatory variables and the quality variable a is a target variable.

The model (F) used for prediction generally represents a complex function in the entire space consisting of operating data and is not a relational expression that is easy for humans to understand. Therefore, in the present disclosure, a model (F₁, F₂, ..., Fₘ) is defined to classify each of m types of quality defects into normal quality and a quality defect. One model (Fᵢ) associated with one of the m types of quality defects, where i is an arbitrary integer from 1 to m, is used to classify (predict) that one quality defect and normal quality. In addition, the model (Fᵢ) has feature importance that indicates the magnitude of the contribution of each element of the operating variables b. Here, in a case in which one of m types of quality defects is indicated, the quality defect may be expressed as quality defect (i). The model corresponding to the quality defect (i) is model (Fᵢ).

As illustrated in FIG. 1, the quality factor estimation apparatus 10 includes a quality data acquisition interface 100, an operating data acquisition interface 101, a quality evaluation data creation unit 102, a feature importance determination unit 103, and a defect factor estimation unit 104. As in the present embodiment, the quality factor estimation apparatus 10 may include an operating condition change instruction unit 105. The quality factor estimation apparatus 10 may further include a memory (storage device) that stores, for example, quality data, operating data, and models. The memory may be configured to include any storage devices, such as semiconductor storage devices, optical storage devices, and magnetic storage devices. The quality factor estimation apparatus 10 may further include a model generation unit that executes a method of generating a model in the case of generating a model.

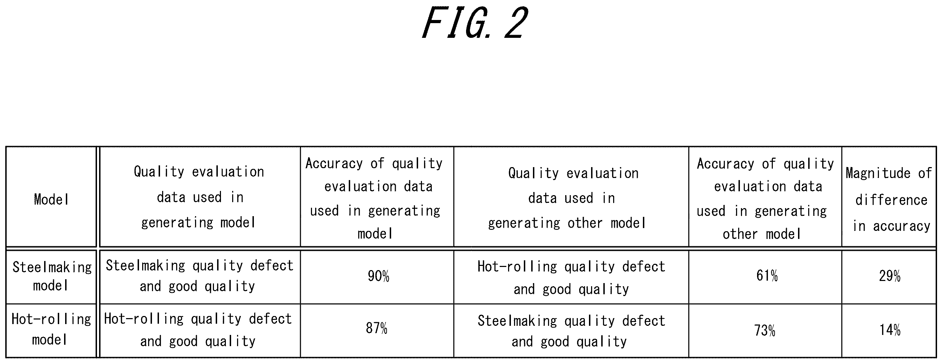

The quality factor estimation apparatus 10 acquires quality data and operating data from the operating data server 60. The operating data server 60 is capable of communicating with the quality factor estimation apparatus 10 via a network and may be implemented, for example, by a computer that manages the manufacturing process. The network is, for example, the Internet. In the present embodiment, a display 30 displays the evaluation result of the models outputted from the quality factor estimation apparatus 10 and the contributions of the explanatory variables. For example, images such as those illustrated in FIGS. 2 to 4, which will be described later, may be displayed on the display 30 as the evaluation results of the models and the contributions of the explanatory variables. The quality factor estimation apparatus 10 may be configured as a computer separate from the operating data server 60. The display 30 may be a device that allows an operator or the like working in the manufacturing process to obtain information. The display 30 may, for example, be a display device such as a liquid crystal display or an organic electro-luminescence panel. The display 30 may also be, for example, a touch panel display and may also be used as an input interface through which an operator or the like issues an instruction to change operating conditions, as will be described later, based on the displayed information. The display 30 may be realized by a display of a terminal device such as a smartphone or a tablet. The terminal device may be a small computer such as a personal computer (PC).

As described above, the quality factor estimation apparatus 10 can be realized by a computer, for example. The computer includes a memory and hard disk drive (storage device), a CPU (processing unit), and the like, for example. Programs can be stored on the hard disk drive and read from the hard disk drive into memory when the programs are to be executed by the CPU. The quality data acquisition interface 100, the operating data acquisition interface 101, the quality evaluation data creation unit 102, the feature importance determination unit 103, and the defect factor estimation unit 104 may be realized by, for example, a CPU that reads and executes a program. In a case in which the quality factor estimation apparatus 10 includes a model generation unit, the model generation unit may be realized by, for example, a CPU that reads and executes a program.

The quality data acquisition interface 100 executes a process of acquiring quality data indicating the quality of the product with respect to m types of quality defects (quality data acquisition step). In the present embodiment, the quality data acquisition interface 100 receives information from a database (operating data server 60), in which quality data associated with the aforementioned arbitrary regions is accumulated, and collects the data as a single database or tabular data.

The operating data acquisition interface 101 executes a process of acquiring operating data of the manufacturing process (operating data acquisition step). In the present embodiment, the operating data acquisition interface 101 receives information from a database (operating data server 60), in which operating data associated with the aforementioned arbitrary regions is accumulated, and collects the data as a single database or tabular data.

The quality evaluation data creation unit 102 executes a process of creating quality evaluation data for each of the m types of quality defects (quality evaluation data creation step). The quality evaluation data for one quality defect is configured as a group of operating data corresponding to that one quality defect. In the present embodiment, the quality evaluation data includes operating data corresponding to quality data indicating that the quality corresponds to the one quality defect and operating data corresponding to quality data indicating that the quality does not correspond to the one quality defect (normal quality). For example, if the quality defect is a flaw, the quality evaluation data is formed by operating data for when the region (a region into which the product is divided) that has the flaw and was deemed to be of poor quality was manufactured, and operating data for when a region that has no flaws and was deemed to be of normal quality was manufactured.

The feature importance determination unit 103 executes a process (feature importance determination step) of acquiring m types of models and determining the feature importance indicating the magnitude of the contribution of the operating variables b for each of the m types of models. In other words, the feature importance determination unit 103 determines the feature importance for each quality defect. The m types of models are models for predicting each of the m types of quality defects and are generated using quality evaluation data with the quality of the product as the target variable and the operating variables b included in the operating data as the explanatory variables. The feature importance determination unit 103 may acquire the m types of models stored in the memory by reading them from the memory, for example. The m types of models are m models (F₁, F₂, ..., Fₘ) that classify the target into a quality defect and normal quality for each of the m types of quality defects, and each model is accompanied by quality evaluation data (D₁, D₂, ..., Dₘ) and a feature importance (FI₁, FI₂, ..., FIₘ). The quality evaluation data corresponding to the model (Fᵢ) may be expressed as quality evaluation data (Dᵢ). The quality evaluation data (Dᵢ) is used to evaluate the models (F₁, F₂, ..., Fₘ) and is also training data (data for model generation) used to generate the model (Fᵢ). Furthermore, the feature importance of a model (Fᵢ) may be expressed as the feature importance (FIᵢ).

Here, the model may be generated by a model generation device different from the quality factor estimation apparatus 10, or may be generated by the quality factor estimation apparatus 10. As described above, in a case in which the quality factor estimation apparatus 10 generates a model, the quality factor estimation apparatus 10 may further include a model generation unit. For example, the model generation device or the model generation unit uses the quality evaluation data (Dᵢ) corresponding to one quality defect (i) as training data that takes the quality of the product as the target variable and the operating variables b included in the operating data as the explanatory variables. The model generation device or model generation unit generates a model (Fᵢ) corresponding to one quality defect (i) by machine learning using the training data. The model generating device or model generation unit generates m types of models (F₁, F₂, ..., Fₘ) by executing the step of generating a model (Fᵢ) for each of the m types of quality defects. Here, the model may be a machine learning model including a deep learning model, a decision tree, or the like.

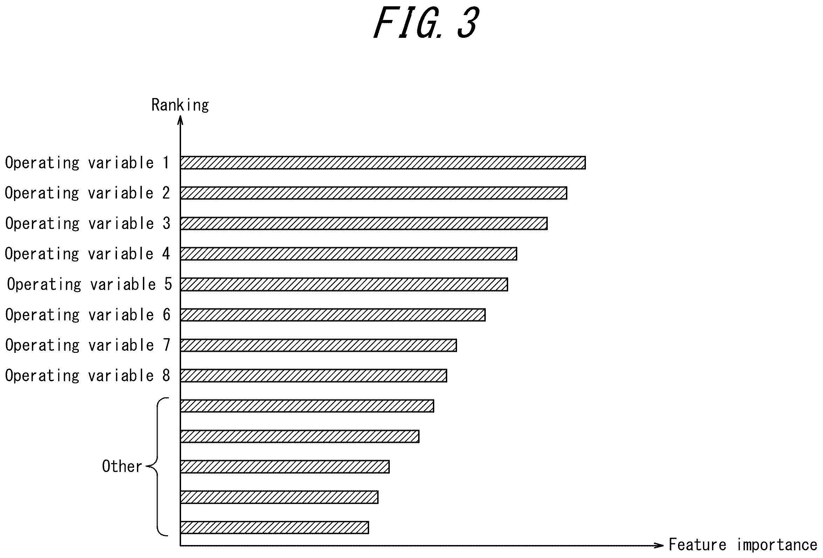

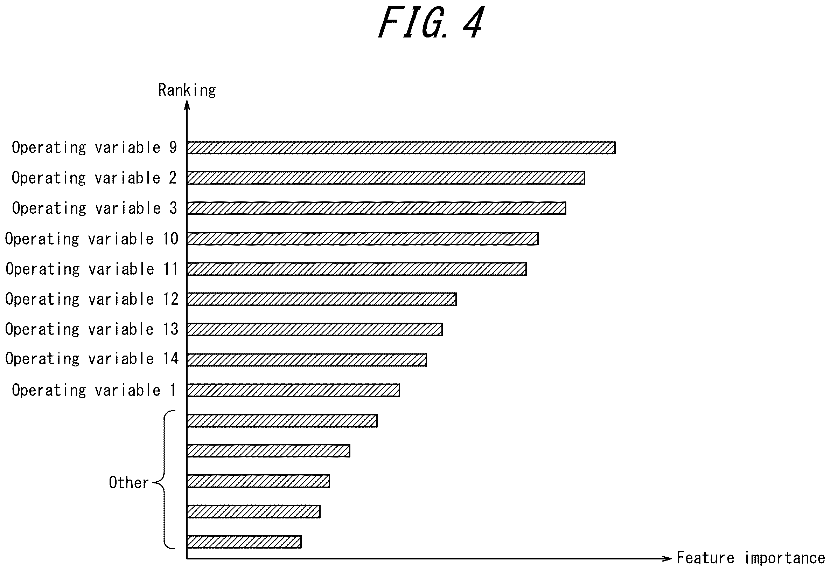

The feature importance (FIᵢ) indicates the degree of influence that p operating conditions, i.e., operating variables b = [b₁, b₂, ..., bₚ], have on the prediction of the quality defect (i) (quality judgment). The feature importance (FIᵢ) may be calculated by a general-purpose method of calculating prediction importance factors that does not depend on the algorithm for creating a numerical model. A typical example is Permutation Importance. However, the feature importance (FIᵢ) may be calculated by other methods. Here, the model (Fᵢ) may be a trained model yielded by machine learning as in the present embodiment, but this example is not limiting. In a case in which the model (Fᵢ) is, for example, a linear regression model, the feature importance (FIᵢ) may be calculated from the partial regression coefficients and the values of the explanatory variables. The feature importance determination unit 103 calculates the feature importance for each of the p operating conditions by any one of the methods and determines the order of the feature importance (the degree of influence on the quality judgment) (see FIGS. 3 and 4). Here, the feature importance may be any numerical value that allows a relative comparison of magnitude and may be a value in an arbitrary unit.

The defect factor estimation unit 104 identifies the operating variable b that is estimated to be a major factor for at least one of the m types of quality defects by comparing the feature importance of the m types of models. In a case in which the identified operating condition among p operating conditions for model (Fᵢ) is ranked high in terms of feature importance, and the identified operating condition is not ranked high in terms of feature importance for models other than model (Fᵢ), the identified operating condition can be estimated to be a major factor for the quality defect (i). The defect factor estimation unit 104 may search for a common operating variable for which the feature importance in the corresponding model is ranked high for two or more types of quality defects out of the m types of quality defects, and identify the operating variable b by regarding the common operating variable as a common factor of corresponding quality defects. In a case in which the identified operating condition among p operating conditions for model (Fᵢ) is ranked high in terms of feature importance, and the identified operating condition is also ranked high in terms of feature importance for models other than model (Fᵢ), the identified operating condition can be estimated to be a common factor. The defect factor estimation unit 104 can estimate the quality defect factor with high accuracy by comparing the feature importance of the m types of models. Here, the process in which the defect factor estimation unit 104 compares the feature importance of m types of models to estimate the factors of quality defects is also referred to as a defect factor estimation step.

Here, the defect factor estimation unit 104 may evaluate the model (Fᵢ) using an evaluation index. The evaluation index may be, for example, the accuracy used to evaluate a machine learning model. The accuracy is calculated by defining a confusion matrix based on the good/poor classification indicating good/poor products in actual operation and the truth or falsity of the model predictions, and using the classifications of true positive (TP), false positive (FP), false negative (FN), and true negative (TN). The calculation formula is Accuracy =((TP + TN)/(TP + TN + FP + FN)).

The defect factor estimation unit 104 may obtain the difference in accuracy (ΔR) by inputting the quality evaluation data (Dⱼ) used in generating the model (Fⱼ) to the model (Fᵢ). In the present embodiment, the evaluation index is the accuracy. The difference in accuracy (ΔR) is obtained by subtracting the accuracy when the quality evaluation data (Dᵢ) used in generating another model (Fⱼ) is inputted to the model (Fᵢ) from the accuracy when the quality evaluation data (Dᵢ) used in generating the model (Fᵢ) is inputted to the model (Fᵢ). That is, the difference in accuracy (ΔR) is the difference in the accuracy of the prediction results for the quality defect (i) by the model (Fᵢ). Here, j is an integer from 1 to m, different from i. The defect factor estimation unit 104 may identify an operating variable b that is estimated to be a major factor for the quality defect (i) corresponding to the model (Fᵢ) in a case in which the magnitude of the difference in accuracy (ΔR) is greater than a predetermined value. The predetermined value is not limited to a specific value, but when the evaluation index is the accuracy as in the present embodiment, 20 % may be used as an example. The larger the absolute value of the difference in accuracy (ΔR), the higher the factor specific to the quality defect (i) is considered to be ranked in the feature importance (FI₁, FI₂, ..., FIₘ) of the model (Fᵢ). In other words, the smaller the absolute value of the difference in accuracy (ΔR), the more difficult it is considered to be to identify a factor that is common to quality defect (i) and quality defect (j) and is ranked highly in the feature importance (FI₁, FI₂, ..., FIₘ) of the model (Fᵢ) of the factors, i.e., a factor specific to the quality defect (i). The defect factor estimation unit 104 may perform such processing for each of the m models (F₁, F₂, ..., Fₘ).

The defect factor estimation unit 104 may further use actual operation data indicating the relationship between the m types of quality defects contained in the operating data and the operating variable b to identify the operating variable b that is estimated to be the major cause for at least one of the m types of quality defects. The actual operation data indicating the relationship between quality defects and the operating variables b may be accumulated in a database of the operating data server 60, for example, and may be acquired by the quality factor estimation apparatus 10 as part of the operating data. By using the actual operation data, the defect factor estimation unit 104 can estimate the quality defect factors with higher accuracy. Furthermore, the defect factor estimation unit 104 may output the evaluation results of the model and the contributions of the explanatory variables to the display 30.

The method of identifying an operating variable b as a major cause of at least one type of quality defect (i) among the m types of quality defects is performed as follows. First, a plurality of operating variables is selected as candidate factors from the feature importance having highly ranked factors specific to the quality defect (i) obtained by the defect factor estimation unit 104. The relationship between these operating variables and the quality defect (i) is investigated, and one operating variable that can most likely explain the generation mechanism of the quality defect (i) is selected. No limitations are placed on the criteria for selecting candidate factors, but as an example, a predetermined number of operating variables determined in advance from the top in importance may be selected as factor candidates (candidate variables). The number of selected operating variables may, for example, be determined as a ratio, such as 0.05 * p, where p is the number of operating variables. However, one or more variables must be selected. No limitations are placed on the method of investigating the relationship between the operating variables that are candidate factors and the quality defect (i), but as an example, correlation analysis between the occurrence probability of the quality defect and the operating variables may be used. That is, a probabilistic evaluation may be performed.

The quality factor estimation apparatus 10 may further include an operating condition change instruction unit 105. The operating condition change instruction unit 105 outputs a command to change operating conditions for the operating variables identified by the defect factor estimation unit 104 as candidate defect factors for the quality defect (i). Here, in the case in which the quality factor estimation apparatus 10 includes the operating condition change instruction unit 105, the quality factor estimation apparatus 10 may be referred to as an operating condition changing apparatus, focusing on the function of changing the operating conditions by issuing a command to change operating conditions to a control device 70 such as a process computer. In addition, when the quality factor estimation apparatus 10 is referred to as an operating condition changing apparatus, a method of estimating quality factors that is executed by the operating condition changing apparatus and further includes an operating condition change instruction step of changing the operating conditions by a command to change operating conditions may be referred to as a method of changing operating conditions.

The operating condition change instruction unit 105 outputs a command to change operating conditions when an instruction to change operating conditions is received from a user (for example an operator). The instruction to change the operating conditions can be inputted from an input device (keyboard, pointer such as a mouse, touch panel, or the like) connected to the terminal device, using the terminal device functioning as the display 30. In addition to displaying for identifying the operating variables that are candidate defect factors, the display 30 may also display an input interface for specifying the operating variables to be changed and the method of change. The user can refer to the displayed contents and input the operating variables to be changed and the method of change into the terminal device, thereby issuing a command to the control device 70, such as a process computer, to make the change. To change the operating variables, a method of change may be defined in advance for each operating variable. For example, the amount of change per operation may be determined for each target quality defect and each operating variable and tabulated, and when an operating variable is specified, the operating condition change instruction unit 105 may refer to the table and output a command to change operating conditions. Furthermore, even for one operating variable, the settings may be stratified for each manufacturing condition, such as the type of manufactured product or the size of the product. In this case, the input interface may be configured so that specific manufacturing conditions can be designated.

Here, the change in the operating variables by the operating condition change instruction unit 105 may be used only for temporary change of production conditions (during production tests). After the production conditions are determined, the program of the control device 70, such as a process computer, may be modified and used in actual operation as a determination of permanent operating variables.

### EXAMPLES

The effects of the present disclosure will be described in detail below based on examples, but the present disclosure is not limited to the content of the examples.

An example will be described in which 33 operating conditions related to steelmaking in the steel manufacturing process, 15 operating conditions related to hot rolling, 5 operating conditions related to cold rolling, and 5 operating conditions related to surface treatment are used as operating variables b, and surface defects of automotive outer panels are used as quality data to be predicted. The quality data is a categorical variable (categorical value) consisting of four types: "steelmaking defects", "hot-rolling defects", "other defects" representing defects other than steelmaking or hot-rolling defects, and "normal" representing no defects. Here, the mechanisms of steelmaking defect and hot-rolling defect occurrence have been estimated based on past findings. The mechanisms of steelmaking defect and hot-rolling defect occurrence are thought to be different. In the present Example, the number of defects that are individually identified is two, which corresponds to the case in which the above m types are two.

The analysis targets are a total of 477,236 records of operating data recorded for each meter of 164 coils collected via the process computer (operating data server 60). In the analysis, the collected operating data was subjected to standardization processing so that the mean and variance were 0 and 1, respectively, across the entire range of the data.

485 records containing steelmaking defects were extracted, and 485 records were chosen by random sampling from the 473,178 records containing normal data. The two sets of data were then combined to create data for predicting steelmaking defects (one set of quality evaluation data). Similarly, 732 records containing hot-rolling defects were extracted, and 732 records were chosen by random sampling from the 473,178 records containing normal data. The two sets of data were then combined to create data for predicting hot-rolling defects (another set of quality evaluation data). The same operating conditions (operating variables b) were included in the steelmaking defect prediction data and the hot-rolling defect prediction data.

FIG. 2 is a diagram illustrating changes in the accuracy of prediction. The accuracy of a steelmaking model (one model) generated using steelmaking defect prediction data and the accuracy when hot-rolling defect prediction data is inputted into the steelmaking model are illustrated. Also illustrated are the accuracy of a hot-rolling model (another model) generated using hot-rolling defect prediction data and the accuracy when data for predicting steelmaking defects is inputted into the hot-rolling model.

The accuracy of the steelmaking model was 90 % when the steelmaking defect prediction data was inputted and the prediction results were evaluated but was 61 % when hot-rolling defect prediction data was inputted and the prediction results were evaluated. Since the accuracy dropped significantly by 29 %, it is thought that the parameters in the steelmaking model have been optimized so that explanatory variables that are significantly related only to steelmaking defects make a greater contribution to the prediction. The accuracy of the hot-rolling model was 87 % when the hot-rolling defect prediction data was inputted and the prediction results were evaluated but was 73 % when the steelmaking defect prediction data was inputted and the prediction results were evaluated. The accuracy dropped by 14 %, but the drop was smaller than that of the steelmaking model.

The process of estimating the causes of steelmaking defects was executed. FIG. 3 illustrates the feature importance of the steelmaking model. As described above, in the feature importance of the steelmaking model, the operating conditions related only to steelmaking defects are ranked high in importance. FIG. 4 illustrates the feature importance of the hot-rolling model. Operating condition 1, which has the highest feature importance in the steelmaking model, is ranked ninth in the hot-rolling model. Operating condition 2, which has the second highest feature importance in the steelmaking model, is also the second highest in the hot-rolling model. Furthermore, operating condition 3, which has the third highest feature importance in the steelmaking model, is also the third highest in the hot-rolling model. Since operating conditions 1 to 3 have high feature importance in the steelmaking model and the hot-rolling model, they were estimated to be common factors for steelmaking defects and hot-rolling defects, rather than being specific factors for steelmaking defects. Furthermore, operating conditions 4 to 6 were ranked fourth to sixth in feature importance in the steelmaking model, but based on past findings (actual operation data illustrating the relationship between quality defects and operating variables b), they were highly likely to be factors causing hot-rolling defects and were excluded from the candidates for steelmaking defect factors. Operating condition 7 and operating condition 8, which are ranked seventh and eighth in feature importance in the steelmaking model, are not ranked highly in feature importance in the hot-rolling model and are not excluded based on past findings. Hence, these operating conditions were determined to be factors particularly related to steelmaking defects. Although it is possible to identify factors related to hot-rolling defects using a similar method, in the present Example, only steelmaking defects were judged. Here, operating condition 8 was the condition of specific water consumption. Since specific water consumption is an item that can be tested, additional verification was performed.

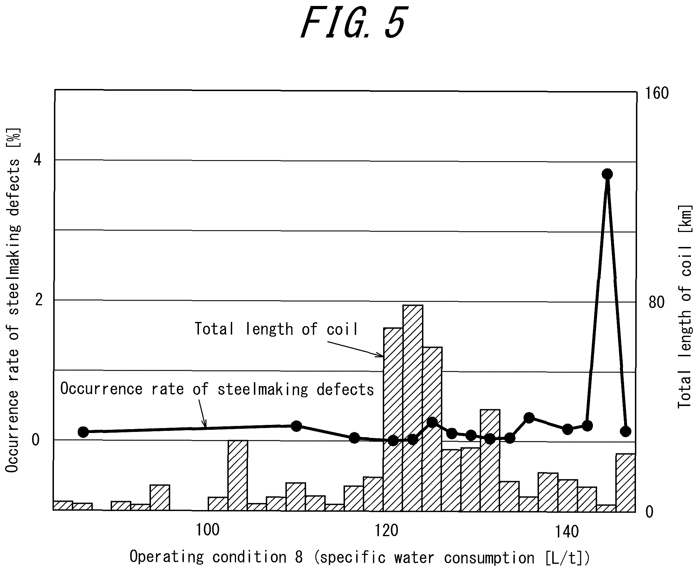

FIG. 5 illustrates the frequency distribution according to the specific water consumption as a bar graph, and the relationship with the occurrence rate of steelmaking defects as a line graph. Here, since the operating data is recorded for each meter of the coil, the total length of the coil (right vertical axis) is used as the frequency. The occurrence rate of steelmaking defects corresponds to the left vertical axis. It was seen that when the specific water consumption was 148 [L/t], the occurrence rate of steelmaking defects increased sharply to 4 %.

According to past findings, the edge portions in the width direction of the slab may be overcooled due to the spraying of excessive coolant compared to the central portion. Overcooling can cause a slab buckling fracture, which is a steelmaking defect. The estimation that the specific water consumption obtained in the present Example is particularly related to steelmaking defects is consistent with past findings.

Based on the results of this analysis, experiments were conducted to optimize the cooling pattern in the manufacturing process of automotive outer panels by reducing the amount of coolant sprayed on the edges of the slab in the width direction and increasing the amount of coolant sprayed on the center of the slab in the width direction. That is, as a production test, the operating variables were changed by the operating condition change instruction unit 105, and the production conditions were finally determined. As a result, it was confirmed that the overcooling of the edge portion was suppressed, and the occurrence rate of steelmaking defects was reduced.

As described above, the method of estimating quality factors, method of changing operating conditions, method of generating a model, quality factor estimation apparatus 10, and operating condition changing apparatus according to the present embodiment can estimate quality defect factors with high accuracy by comparing the feature importance of m types of models. Furthermore, the method of estimating quality factors, method of changing operating conditions, method of generating a model, quality factor estimation apparatus 10, and operating condition changing apparatus according to the present embodiment can present the model evaluation results and the contribution of the explanatory variables to the operator.

While embodiments of the present disclosure have been described with reference to the drawings and examples, it should be noted that the present disclosure is not limited to the above-described embodiments, and various modifications and amendments may easily be implemented by those skilled in the art based on the present disclosure. Accordingly, such modifications and amendments are included within the scope of the present disclosure. For example, functions or the like included in each component, each step, or the like can be rearranged without logical inconsistency, and a plurality of components, steps, or the like can be combined into one or divided. Embodiments according to the present disclosure can also be realized by a storage medium having recorded thereon a program to be executed by processor included in an apparatus. Such embodiments are also to be understood as included in the scope of the present disclosure.

### REFERENCE SIGNS LIST

- 10: Quality factor estimation apparatus (operating condition changing apparatus)
- 30: Display
- 60: Operating data server
- 70: Control device
- 100: Quality data acquisition interface
- 101: Operating data acquisition interface
- 102: Quality evaluation data creation unit
- 103: Feature importance determination unit
- 104: Defect factor estimation unit
- 105: Operating condition change instruction unit

## Claims

1. A method of estimating quality factors to be executed by a quality factor estimation apparatus used in a manufacturing process to manufacture a product, the method comprising:
a quality data acquisition step of acquiring quality data indicating a quality of the product with respect to normal quality and m types of quality defects, m being two or more;
an operating data acquisition step of acquiring operating data of the manufacturing process;
a quality evaluation data creation step of creating m types of quality evaluation data formed by the quality data and the operating data corresponding to the quality defect for each of the m types of quality defects, and the quality data and the operating data corresponding to the normal quality;
a feature importance determination step of acquiring m types of models for predicting each of the m types of quality defects, the m types of models being generated using the quality evaluation data with the quality of the product as a target variable and an operating variable included in the operating data as an explanatory variable, and determining a feature importance indicating a magnitude of contribution of the operating variable for each of the m types of models; and
a defect factor estimation step of identifying the operating variable that is estimated to be a major factor for at least one of the m types of quality defects by comparing the feature importance of the m types of models.

2. The method of estimating quality factors according to claim 1, wherein the defect factor estimation step includes inputting the quality evaluation data used in generating one model among the m types of models and the quality evaluation data used in generating another model into the one model, and in a case in which a difference in accuracy of a prediction result is greater than a predetermined value, identifying the operating variable that is estimated to be a major factor for a quality defect corresponding to the one model.

3. The method of estimating quality factors according to claim 1 or 2, wherein the defect factor estimation step includes searching for a common operating variable for which the feature importance in corresponding models is ranked high for two or more types of quality defects out of the m types of quality defects, and identifying the operating variable by regarding the common operating variable as a common factor of corresponding quality defects.

4. The method of estimating quality factors according to any one of claims 1 to 3, wherein the defect factor estimation step includes selecting, for at least one of the m types of quality defects, a candidate variable of an operating variable that is estimated to be a major factor, based on the feature importance, and further using actual operation data that indicates a relationship between the quality defect and the operating variable to probabilistically evaluate a relationship between the selected candidate variable and the quality defect and identify the operating variable that is estimated to be a major factor.

5. A method of changing operating conditions, the method comprising an operating condition change instruction step of changing operating conditions by a command to change operating conditions for the operating variable identified by the method of estimating quality factors according to claim 3 or 4.

6. A method of generating a model to be used in the method of estimating quality factors according to any one of claims 1 to 4, comprising:
a step of generating a model corresponding to the one quality defect by machine learning using training data, with the quality evaluation data corresponding to the one quality defect being the training data, and the training data taking the quality of the product as a target variable and an operating variable included in the operating data as an explanatory variable,
wherein the m types of models are generated by executing the step of generating the model for each of the m types of quality defects.

7. A quality factor estimation apparatus used in a manufacturing process to manufacture a product, the quality factor estimation apparatus comprising:
a quality data acquisition interface configured to acquire quality data indicating a quality of the product with respect to normal quality and m types of quality defects, m being two or more;
an operating data acquisition interface configured to acquire operating data of the manufacturing process;
a quality evaluation data creation unit configured to create m types of quality evaluation data formed by the quality data and the operating data corresponding to the quality defect for each of the m types of quality defects, and the quality data and the operating data corresponding to the normal quality;
a feature importance determination unit configured to acquire m types of models for predicting each of the m types of quality defects, the m types of models being generated using the quality evaluation data with the quality of the product as a target variable and an operating variable included in the operating data as an explanatory variable, and determining a feature importance indicating a magnitude of contribution of the operating variable for each of the m types of models; and
a defect factor estimation unit configured to identify the operating variable that is estimated to be a major factor for at least one of the m types of quality defects by comparing the feature importance of the m types of models.

8. The quality factor estimation apparatus according to claim 7, wherein the defect factor estimation unit inputs the quality evaluation data used in generating one model among the m types of models and the quality evaluation data used in generating another model into the one model, and in a case in which a difference in accuracy of a prediction result is greater than a predetermined value, identifies the operating variable that is estimated to be a major factor for a quality defect corresponding to the one model.

9. The quality factor estimation apparatus according to claim 7 or 8, wherein the defect factor estimation unit searches for a common operating variable for which the feature importance in corresponding models is ranked high for two or more types of quality defects out of the m types of quality defects, and identifies the operating variable by regarding the common operating variable as a common factor of corresponding quality defects.

10. The quality factor estimation apparatus according to any one of claims 7 to 9, wherein the defect factor estimation unit selects, for at least one of the m types of quality defects, a candidate variable of an operating variable that is estimated to be a major factor, based on the feature importance, and further uses actual operation data that indicates a relationship between the quality defect and the operating variable to probabilistically evaluate a relationship between the selected candidate variable and the quality defect and identify the operating variable that is estimated to be a major factor.

11. An operating condition changing apparatus comprising an operating condition change instruction unit configured to change operating conditions by a command to change operating conditions for the operating variable identified by the quality factor estimation apparatus according to claim 9 or 10.
